# EUROPEAN PATENT SPECIFICATION

(11) **EP 0 989 747 B1**
(45) Date of publication and mention of the grant of the patent: **17.11.2010**
(21) Application number: 99307568.8
(22) Date of filing: 24.09.1999
(51) Int. Cl.: H04N 5/232, H04N 5/222

(54) **Television lens apparatus adapted for a virtual studio**
Fernsehobjektivvorrichtung angepasst für ein virtuelles Studio
Appareil d'objectif de télévision adapté pour un studio virtuel

(30) Priority: 28.09.1998 JP 27360698
(43) Date of publication of application: 29.03.2000
(73) Proprietor: CANON KABUSHIKI KAISHA, Tokyo (JP)
(72) Inventor: Senda, Akira, Canon Kabushiki Kaisha, Tokyo (JP)
(74) Representative: TBK-Patent

(56) References cited:
- WO-A-96/32697
- WO-A-97/22918
- US-A- 5 157 431
- US-A- 5 479 597

## Description

### BACKGROUND OF THE INVENTION

### Field of the Invention

The present invention relates to a photographing system and a television lens and, more particularly, to operation and control of the television lens at studios etc. for video photography.

### Related Background Art

Among the studios etc. in broadcasting stations, virtual studios have been arising in recent years for the purposes of labor saving and cost reduction. The virtual studios are designed in such a way that the studio wall is painted only blue, there are only a person or people as a subject and a television camera in the studio, and all the scenery, appurtenances, properties, etc. in television pictures are drawn by

computer graphics. Such an arrangement is described in US-A-5 497 597.

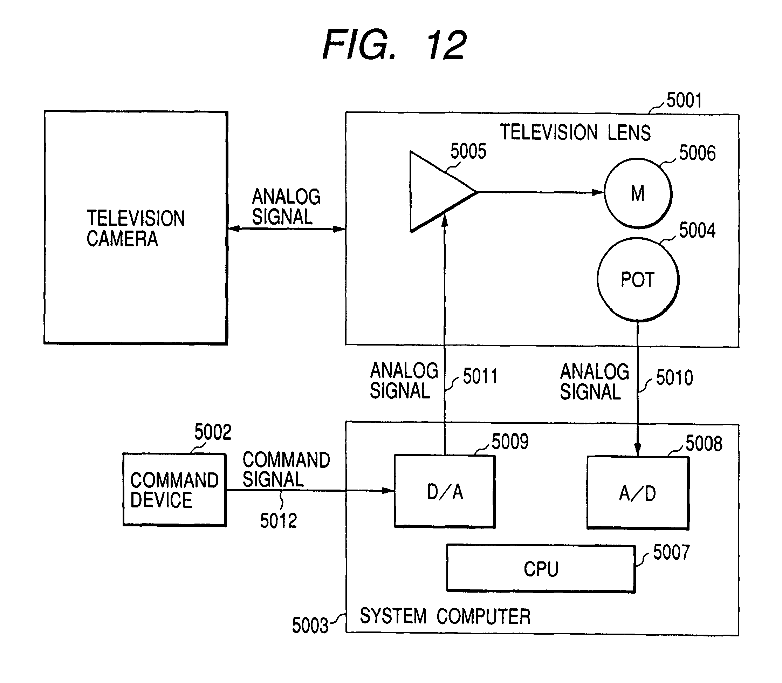

Control of zooming, focusing, and other mechanisms of the television lens at the conventional virtual studios etc. is carried out by the television lens and a system computer, as illustrated in Fig. 12.

In Fig. 12, the system is constructed in such connection that an A/D converter 5008 of the system computer 5003 accepts a signal from a potentiometer 5004, which detects the mechanical position of the zooming, focusing, iris, and other mechanisms of the television lens 5001, and a CPU 5007 handles the data. A command signal 5012 from a command device 5002 to activate the zooming, focusing, iris, and other mechanisms of the television lens 5001 was converted into an analog signal 5011 by the CPU 5007 and D/A converter 5009 of the system computer 5003 and the analog signal 5011 was put into an amplifier 5005 of the television lens 5001.

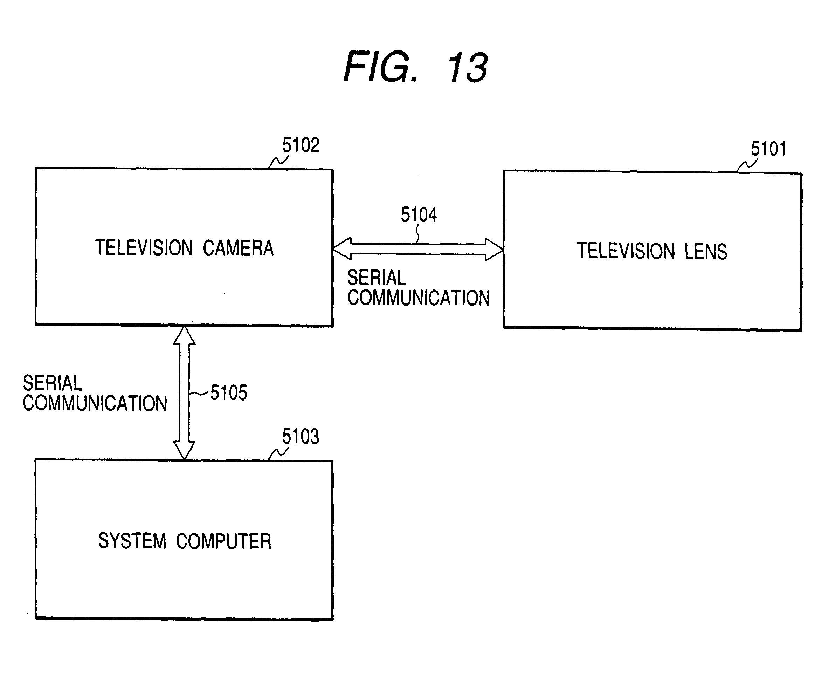

A recent trend is, as illustrated in Fig. 13, that the television camera 5102, the television lens 5101, and the system computer 5103 are connected via a digital, serial interface.

In the prior art example illustrated in Fig. 12, however, because the signal 5010 from the potentiometer 5004 of the television lens 5001 and the input signal 5011 into the amplifier 5005 both were analog signals, the system was weak against noise from the outside and the number of wires was large.

In the prior art example illustrated in Fig. 13, the problem was influence of sampling cycles at the digital, serial interfaces.

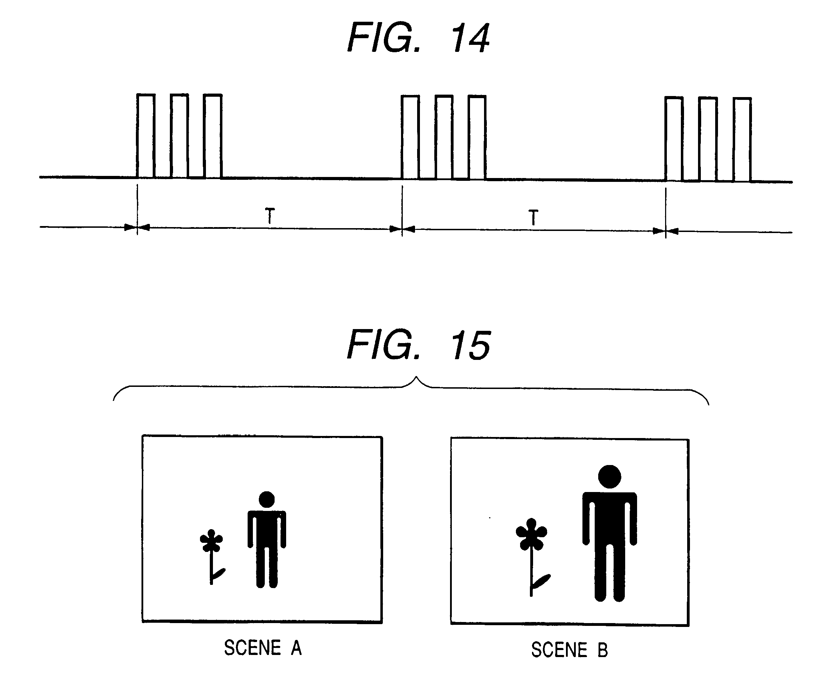

The serial interface (serial communication) 5104 of Fig. 13 normally sends and receives data at the timing of vertical synchronization signals of television signals in order to prevent noise from mixing in video signals of television. This is illustrated in Fig. 14, in which data is transmitted in cycles of the time T of the vertical synchronization signals of television signals. The time T is 16.7 ms in the NTSC system or 20 ms in the PAL system.

Information transmitted through the serial interface is not only information associated with driving of zooming, iris, focusing, etc. of the television lens, but also various switch information and a lot of other information concerning the television camera and television lens. Supposing this serial interface 5104 were occupied by only the information associated with the driving of zooming, iris, focusing, etc. of the television lens, the information that can be transmitted would be that of the frequency not more than the frequency equal to the inverse of the above time T because of the sampling theorem. Namely, the maximum frequency band of signals that the serial interface can transmit is 50 Hz or 60 Hz.

The frequency does not have to be so high for the command signals of zooming, iris, focusing, etc., given to the serial interface by human operation, whereas the control of the mechanisms for zooming, iris, focusing, etc. of the television lens necessitates motion signals (position signals) of the mechanisms of the television lens in a frequency band spreading up to accurate and high frequencies.

However, in cases wherein the motion signals (position signals) of the mechanisms of the television lens were transmitted through the serial interface, they were able to be transmitted only at low frequencies for the above reason.

This might cause the mechanisms of the television lens to fail to perfectly follow the command signals given according to operation of cameraman and the mechanisms etc. of the television lens sometimes suffered parasitic oscillation or the like, which might negatively affect photographing pictures and which raised the needs for countermeasures.

In order to superimpose a photographing picture on a CG (computer graphic) picture made by computer as in the case of the virtual studios, it is necessary to supply accurate information about an angle of field and a distance from focal point to object during photography in real time to the computer.

Fig. 15 is an explanatory diagram to show pictures taken at the virtual studio. For example, let us suppose that in figure A a person was photographed by the television camera and an image of a flower on the left side was prepared by computer. Here let us assume that the person was enlarged by zooming with manipulation of the television camera and the television lens in order to change the screen from scene A to scene B.

The picture would be unnatural at this time unless the flower near the person were not enlarged at the same zoom rate as the person. The computer system 5003 illustrated in Fig. 12 needed to capture the zoom change of the person under photography and prepare a picture of a new flower immediately.

Namely, in order to superimpose photographed moving pictures on CG pictures, it was necessary for the motion signals of the zooming, iris, focusing, and other mechanisms of the television lens to be transmitted as accurate signals without a time lag (in the wide frequency band including high frequencies) to the system computer.

### SUMMARY OF THE INVENTION

It is an object of the invention to provide an improved image processing system by means of which the processing for generating pictures is enhanced.

This object is achieved by an image processing system according to claim 1. Advantageous further developments are as set forth in the dependent claims.

Other objects of the present invention will become more apparent by the description of embodiments which will be given referring to the following drawings.

### BRIEF DESCRIPTION OF THE DRAWINGS

Fig. 1 is a block diagram of the first embodiment of the present invention;
Fig. 2 is a block diagram of the third embodiment of the present invention;
Fig. 3 is a block diagram of the second embodiment of the present invention;
Fig. 4 is a block diagram of the fourth embodiment of the present invention;
Fig. 5 is a detailed block diagram of the first embodiment of the present invention;
Fig. 6 is a detailed block diagram of the second embodiment of the present invention;
Fig. 7 is a flowchart diagram of the television lens in the first embodiment of the present invention;
Fig. 8 is a flowchart diagram of the system computer in the first embodiment of the present invention;
Fig. 9 is a flowchart diagram of the television lens in the second embodiment of the present invention;
Fig. 10 is a first connector connection diagram of the television lens in the first embodiment;
Fig. 11 is a second connector connection diagram of the television lens in the third embodiment;
Fig. 12 is a block diagram to show one of prior art examples;
Fig. 13 is a block diagram to show another prior art example;
Fig. 14 is a waveform diagram for explaining the communication operation in Fig. 13; and
Fig. 15 is an explanatory diagram to show scenes photographed at the virtual studio.

### DESCRIPTION OF THE PREFERRED EMBODIMENTS

### (First Embodiment)

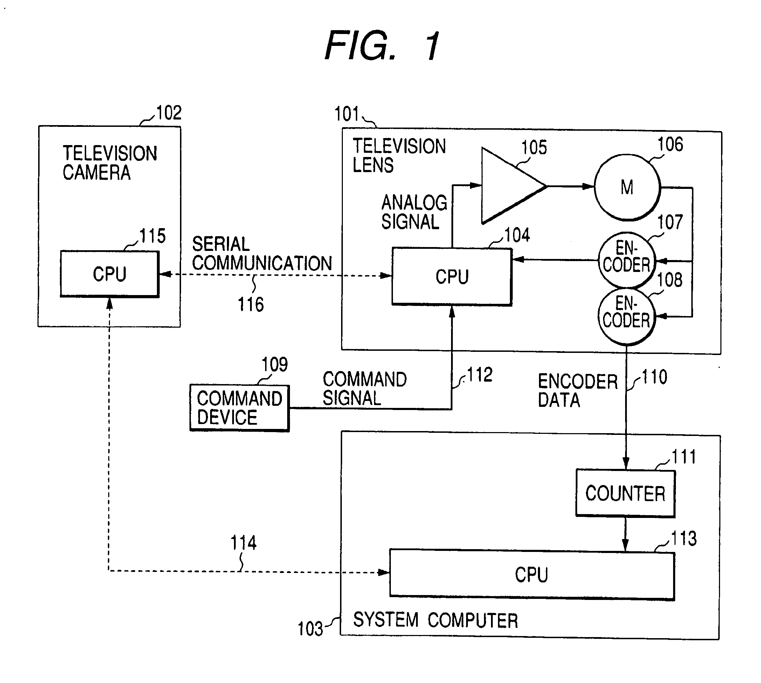

Fig. 1, Fig. 5, Fig. 7, and Fig. 8 show the first embodiment of the present invention.

Fig. 1 is a block diagram for explaining the first embodiment of the present invention.

A CPU 104 of the television lens 101 is connected to a CPU 115 of the television camera 102 by serial communication 116 which sends and receives data in the same transfer cycles as those of the vertical synchronization signals, and the CPU 115 of the television camera 102 is connected to a CPU 113 of the system computer 103 by serial communication 114 or the like.

An encoder 107 as a detection means, which detects the action of the driving mechanisms of zooming, iris, focusing, etc. of the television lens 101, is one for controlling the television lens 101.

The control in response to a command signal 112 for the driving mechanisms of zooming, iris, focusing, etc. of the television lens 101 is carried out inside the television lens 101; the CPU 104 compares the command signal 112 from a command device 109 with an actuating signal (position signal) of each mechanism of the lens from the encoder 107 and will drive a motor 106 via an amplifier 105 if there is a difference between the command signal and the position signal.

An encoder 108 as a detection means, which detects the operation of the driving mechanisms of zooming, iris, focusing, etc. of the television lens 101, is connected to a counter 111 of the system computer 103 via a parallel signal line (encoder data) 110, and the CPU 113 reads in information from the counter 111.

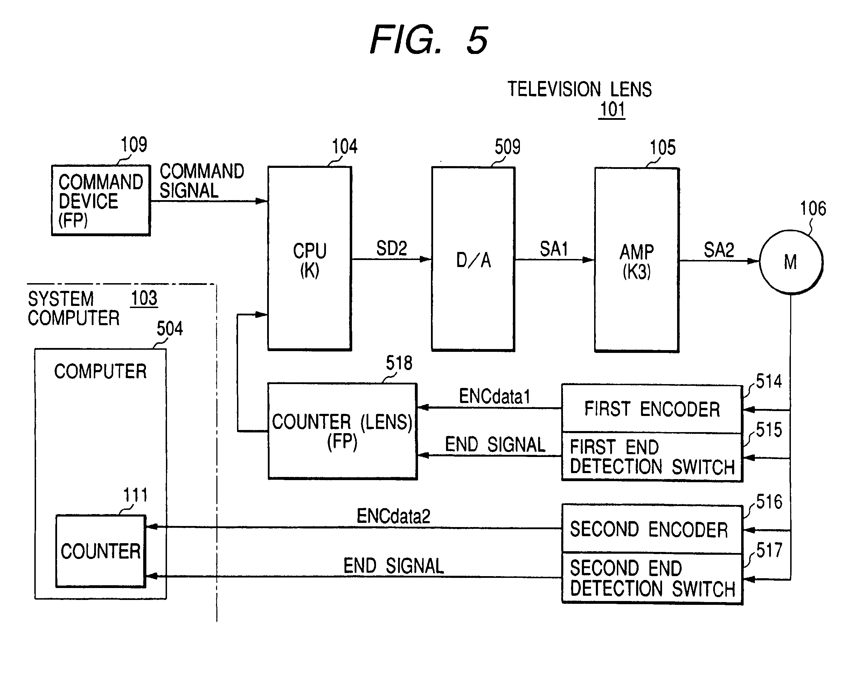

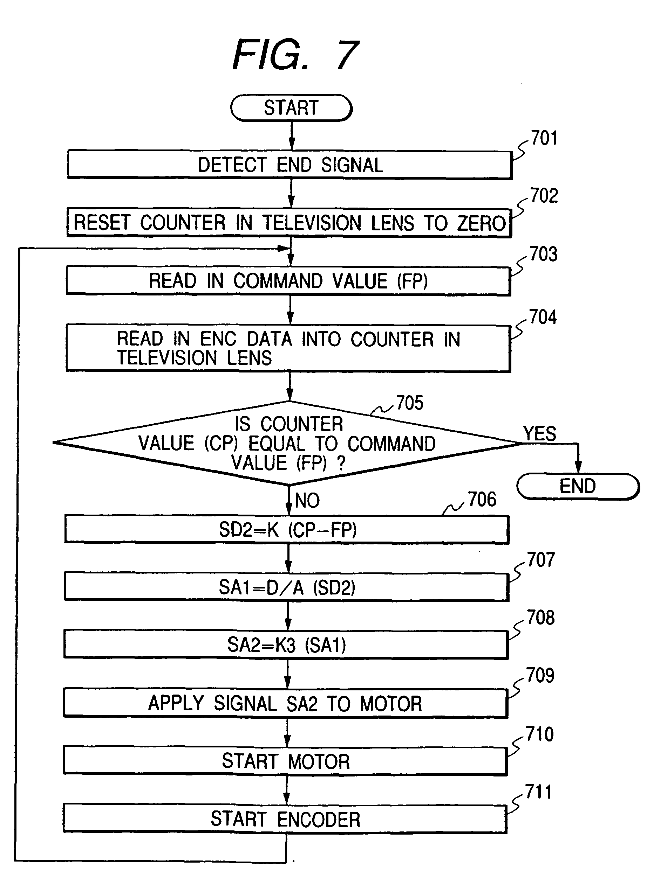

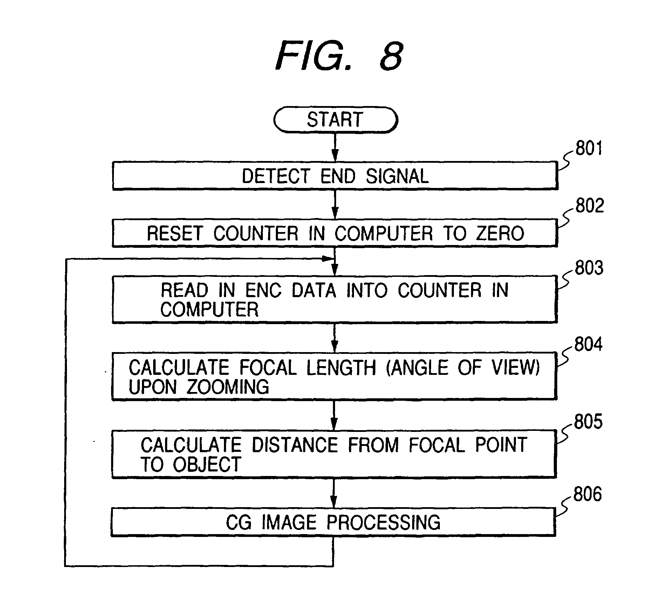

The detailed description of Fig. 1 will be given referring to the block diagram of Fig. 5 and the flowcharts of Fig. 7 and Fig. 8.

Fig. 5 is the block diagram to show the details of the system computer 103 and the television lens 101 of Fig. 1. Fig. 7 is the flowchart diagram to show the flow of information in the television lens 101 of Fig. 5. Fig. 8 is the flowchart diagram to show the flow of information in the system computer 103 of Fig. 5.

The operation in the television lens will be described referring to Fig. 5 and Fig 7.

First end detection switch 515 and second end detection switch 517 are switches which detect, for example, the position of the wide end (wide-angle end) or the tele end (telephoto end) in the zooming operation among the operations of the driving mechanisms of zooming, focusing, iris, etc. of the television lens 101. A signal of the end detection switch resets a counter described hereinafter to zero to be used as a positional reference of the driving mechanisms of the lens.

The first end detection switch 515 is used for the control of the driving mechanisms of the television lens 101. The second end detection switch 517 is used for superposition of a photographed picture from the television lens and television camera described hereinafter on a computer graphic picture (CG picture) produced by the system computer 103.

It is a matter of course that only one switch can serve as both the first end detection switch 515 and the second end detection switch 517, but the two switches are provided herein in order to facilitate the description.

The end detection switch may be a mechanical switch or may be constructed using either of a photosensor, a magnetic sensor, and so on.

The encoder for detecting the operation of the driving mechanisms of zooming, focusing, iris, etc. of the television lens 101 is also comprised of a first encoder 514 for the control of the driving mechanisms of the television lens 101 and a second encoder 516 for the superposition of the photographed picture from the television lens and television camera on the computer graphic picture (CG picture) produced by the system computer 103.

Of course, one encoder can also serve as these two encoders. The encoder used herein is an increment encoder which generates pulses in a number according to a predetermined rotational angle upon rotation of the encoder.

There is another method employing an absolute encoder instead of the increment encoder and the end detection switch. The use of the absolute encoder increases the number of wires out of the absolute encoder on one hand, but obviates the need for the end detection switch on the other hand, because the absolute encoder generates a pulse of an absolute value (digital value) against a rotational angle of the encoder and because the position of the end of each mechanism of the television lens is also specified by a certain absolute value.

In the flowchart of Fig. 7, step (hereinafter abbreviated as S) 701 is to activate each mechanical part of the television lens upon power-up or the like in the television lens itself to move each mechanical part to the end position and detect the end of each mechanical part of the television lens from the first end detection switch 515. S702 is to reset the counter 518 in the television lens to zero, subsequent to S701.

S703 is a step in which the CPU 104 of the television lens 101 reads in a command value (FP) from the command device 109.

S704 is to read data of the first encoder 514 into the counter 518. Since the output of the counter 518 is accumulation of pulses from the first encoder 514, the output of the counter 518 indicates the position of each driving mechanism portion of the television lens eventually. Let CP stand for a value accumulated in the counter.

S705 is to compare the counter value (CP) with the command value (FP) in the CPU 507. If they are equal, which means that the actual position of each driving mechanism portion of the television lens agrees with the position of each driving mechanism portion of the television lens indicated by the command value, the operation of Fig. 7 will be terminated.

On the other hand, if the counter value (CP) is different from the command value (FP), the driving mechanism portion of the television lens will be driven so as to achieve agreement between them.

S706 is a step in which the CPU 104 multiplies a difference between the value CP of the counter 518 and the command value FP by a gain K to obtain SD2 and outputs SD2 to a D/A converter 509.

S707 is a step in which the D/A converter 509 converts the digital signal SD2 to an analog signal SA1.

S708 is a step in which the analog amplifier 105 multiplies the signal SA1 by a gain K3 so as to obtain a signal SA2 capable of activating the motor 106 which drives each mechanism of the television lens.

S709 is to apply the signal SA2 to the motor 106, S710 to drive the motor 106 and, at the same time as it, S711 is to start the first encoder and the second encoder. Then the flow again transfers to S703.

Fig. 8 is the flow of information in the system computer 103.

S801 is to detect an end signal from the second end detection switch 517 of the television lens 101 and S802 thereafter is to reset a counter 111 of a computer 504 to zero.

S803 is to transmit the motion of the driving mechanism of the television lens from the second encoder into the counter 111 to obtain the position of the driving mechanism of the television lens. Based on the position of the driving mechanism of the television lens, S804 is to calculate the focal length (angle of view) upon zooming and S805 is to calculate the distance from focal point to object. Then S806 is to superimpose a photographed picture on a CG picture, based on the optical position information of the photographed picture (the angle of view and the distance from focal point to object).

This permits the zooming and focusing information of the television lens to be detected in real time and, for example as illustrated in scene A and scene B of Fig. 15, the processing of the size etc. of the flower (CG image) is thus carried out in response to the magnification change of the person.

### (Second Embodiment)

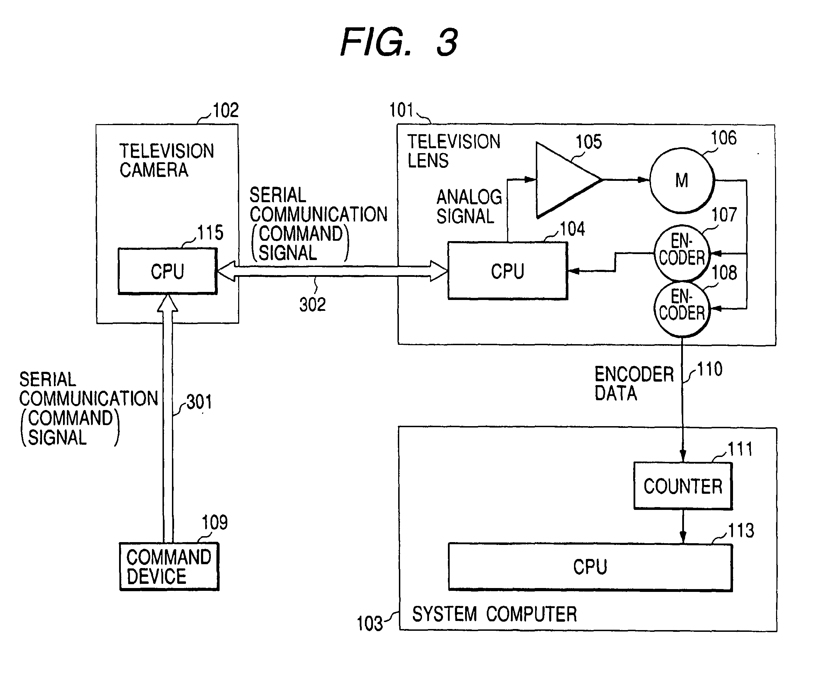

Fig. 3 shows the second embodiment.

The first embodiment illustrated in Fig. 1 is arranged to input the command signal to the television lens directly into the CPU of the television lens, whereas the present embodiment is arranged, as illustrated in Fig. 3, to input the command signal from the command device 109 via serial communication 301 into the CPU 115 of the television camera 102 and thereafter transfer the command signal from the CPU 115 again via serial communication 302 into the CPU 104 of the television lens 101.

The cameraman to manipulate the television lens normally stands behind the television camera. Therefore, because in the case of the first embodiment illustrated in Fig. 1 the command device of zooming and focusing is connected directly to the television lens, a cable of the command device is extended up to behind the television camera so as to permit the cameraman to manipulate it. Photography is carried out while the television lens and the television camera are normally mounted on a tripod or on a dolly designed to move around in the studio.

In this case, the vertical and horizontal movement of the television lens and television camera causes the cable of the command device to swing, which would affect the photographed picture in certain cases. In order to avoid it, it is necessary to fix the cable (with cable clamps).

In contrast with it, since the second embodiment illustrated in Fig. 3 is arranged to locate the command device of zooming and focusing in the rear part of the television camera, the cable of the command device can be the shortest from the television camera to the cameraman. Since the cameraman can thus manipulate the command device without attention to the swing of the cable, the operability is improved, as compared with the first embodiment illustrated in Fig. 1.

### (Third Embodiment)

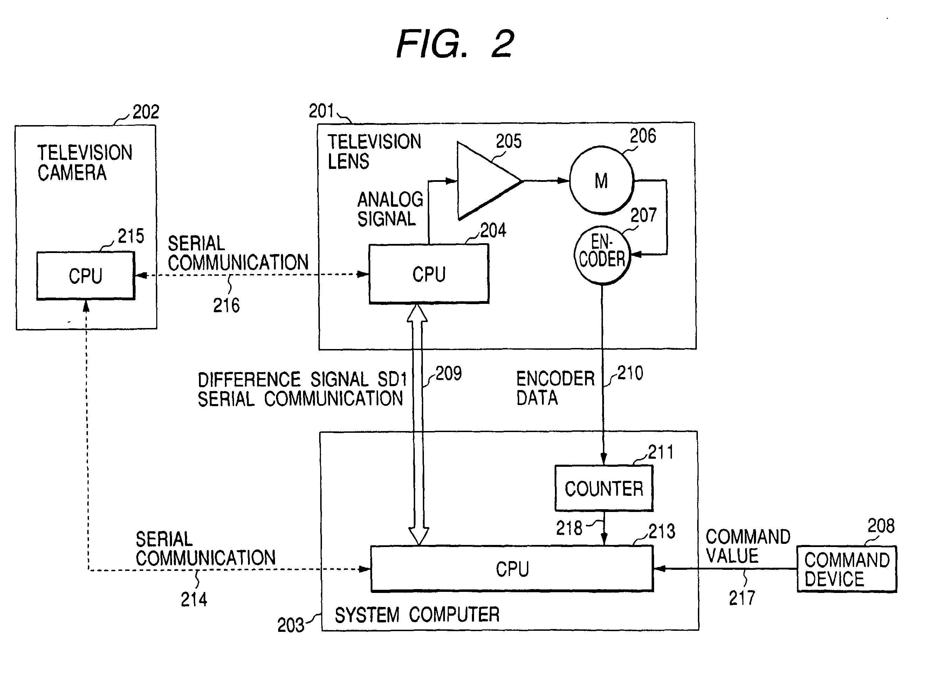

Fig. 2, Fig. 6, and Fig. 9 show the third embodiment.

Fig. 2 is the block diagram to explain the third embodiment of the present invention.

The CPU 204 of the television lens 201 is connected to the CPU 215 of the television camera 202 by serial communication 216 which sends and receives data in the same transfer cycles as those of the vertical synchronization signals, and the CPU 215 of the television camera 202 is connected to the CPU 213 of the system computer 203 by serial communication 214 or the like. The encoder 207 as a detection means, which detects the operation of the driving mechanisms of zooming, iris, focusing, etc. of the television lens 201, is one for controlling the television lens 201.

The control of the driving mechanisms of zooming, iris, focusing, etc. of the television lens 201 is carried out directly by the television lens and the system computer without intervention of the television camera.

The encoder data 210 from the encoder 207 is put into the counter 211, and the CPU 213 compares a position signal 218 of the driving mechanism of the television lens, which is the output of the counter 211, with the command signal 217 from the command device 208. If there is a difference between the command signal 217 and the position signal 218 the CPU 213 will send a difference signal 209 between the command signal 217 and the position signal 218 through serial communication 209 to the CPU 204 of the television lens 201 to drive the motor 206 via the amplifier 205.

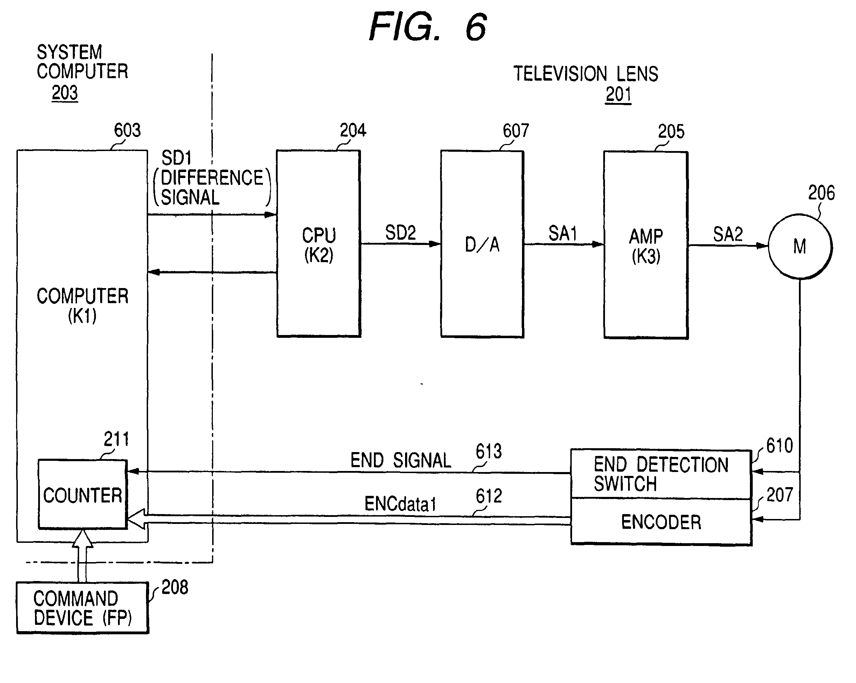

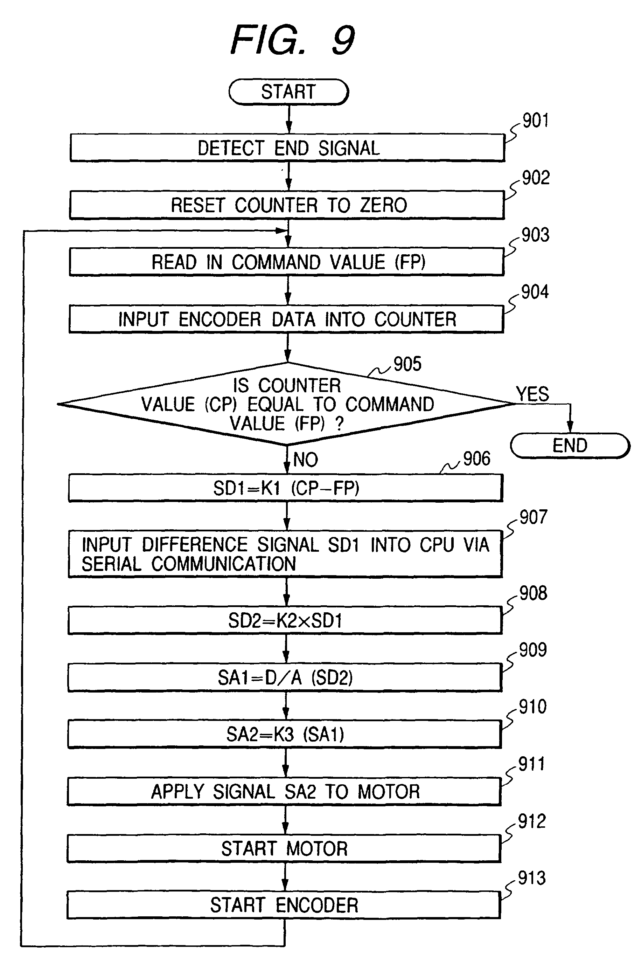

The detailed description of Fig. 2 will be given referring to the block diagram of Fig. 6 and the flowchart of Fig. 9.

Fig. 6 is the block diagram to show the details of the system computer 203 and the television lens 201 of Fig. 2. Fig. 9 is the flowchart diagram to show the flow of information in the television lens 201 and the system computer 203 of Fig. 6.

The operation inside the television lens will be described referring to Fig. 6 and Fig. 9.

The end detection switch 610 is a switch which detects, for example, the position of the wide end (wide-angle end) or the tele end (telephoto end) in the zooming operation among the operations of the driving mechanisms of zooming, focusing, iris, etc. of the television lens 201. This end detection switch 610 is used for the control of the driving mechanisms of the television lens 201 and for the superposition of the photographed image from the television lens and the television camera on the computer graphic picture (CG picture) produced by the system computer 203.

In Fig. 9, S901 is to activate the driving mechanism portions of the television lens in response to the command signal from the television lens itself or from the system computer to detect the end of each mechanism portion of the television lens from the end detection switch 610.

S902 is to reset the counter 211 in the system computer 203 to zero, subsequent to S901.

S903 is a step in which the computer 603 of the system computer 203 reads in the command value (FP) from the command device 208. S904 is to input the data of the encoder 207 into the counter 211 of the system computer 203. Since the output of the counter 211 is accumulation of pulses from the encoder 207, the output signal of the counter 211 is a position signal of the driving mechanism portion of the television lens. Let CP stand for a value of the position signal accumulated in the counter.

S905 is a step in which the computer 603 compares the counter value (CP) with the command value (FP). If they are equal, which means that the actual position of the driving mechanism portion of the television lens agrees with the position of each driving mechanism portion of the television lens indicated by the command value, the operation of Fig. 9 will be terminated.

If the counter value (CP) is different from the command value (FP), the driving portion of the television lens will be driven so as to achieve agreement between them. S906 is a step in which the computer 603 multiplies the difference between the value CP of the counter 211 and the command value FP by the gain K1 to generate SD1. S907 is to input the difference signal SD1 via the serial communication 209 of Fig. 2 into the CPU 204 of the television lens 201. S908 is to multiply SD1 by the gain K2 in the CPU 204 to obtain SD2 and supply SD2 to the D/A converter 607.

S909 is a step in which the D/A converter 607 converts the digital signal SD2 to the analog signal SA1.

S910 is a step in which the analog amplifier 205 multiplies the signal SA1 by the gain K3 to obtain the signal SA2 capable of activating the motor 206 for driving each mechanism of the television lens. When the signal SA2 is applied to the motor 206 in S911, the motor 206 is driven in S912 and, at the same time as it, the encoder is started in S913. Then the flow transfers again to S903.

The CG image processing of Fig. 8 in the system computer, which was described referring to Fig. 1 and Fig. 5, is also carried out similarly in Fig. 2 and Fig. 6.

### (Fourth Embodiment)

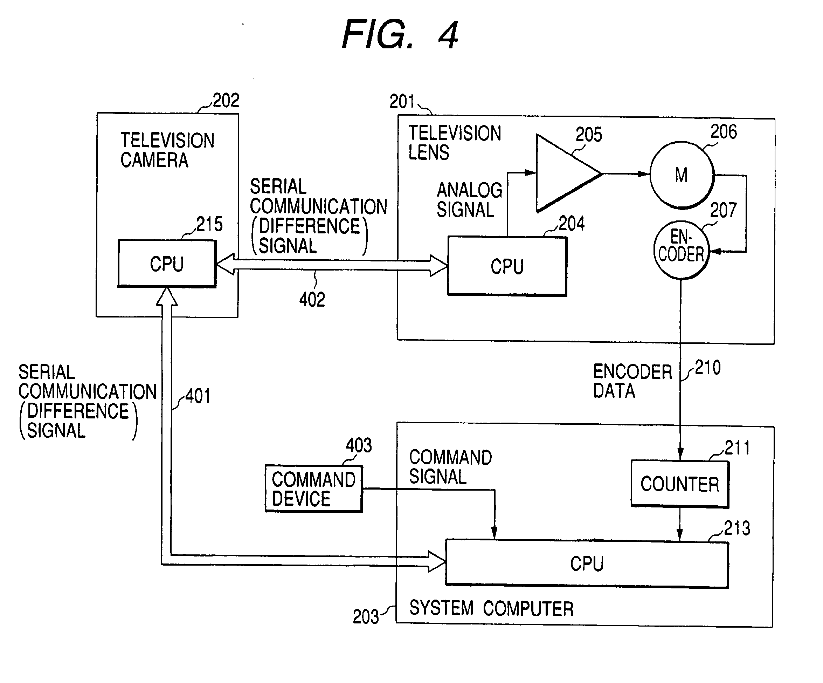

Fig. 4 shows the fourth embodiment.

The third embodiment illustrated in Fig. 2 is arranged to input the difference signal SD1 from the system computer directly into the CPU of the television lens, whereas the fourth embodiment illustrated in Fig. 4 is arranged to input the difference signal SD1 via serial communication 401 into the CPU 215 of the television camera 202 and thereafter transfer the difference signal SD1 from the CPU 215 again via serial communication 402 into the CPU 204 of the television lens 201. In this case, the command device is set near the system computer and is thus suitable for control of the television lens in a sub-control room or the like for adjustment of picture, selection, etc. adjacent to the photographing studio, instead of the control of the television lens near it.

In Fig. 3 and Fig. 4 the command signal is transmitted via the CPU of the television camera to the television lens by serial communication, but it is noted that the transmission can also be implemented by only a wire inside the television camera without pass through the CPU of the television camera. The form of the command signal at this time does not always have to be only the digital, serial signal, but it may also be another form of digital data.

Since the photographing systems of Fig. 1 and Fig. 3 are arranged to effect such sharing of works that the television lens itself carries out the control of each mechanism of the television lens and that the system computer carries out the CG picture synthesis, they are optimal for separate production of the devices where the television lens and the system computer are made by different makers.

Since the photographing systems of Fig. 2 and Fig. 4 have the simple structure inside the television lens and permit the system computer itself to handle both the CG picture generation and the motion of the photographed picture by the control of each driving mechanism of the television lens though the inside processing in the system computer becomes rather complicated, they facilitate the superposition of the CG picture on the photographed picture.

Next described for each of the above embodiments are connections of the command signal, the encoder data, and the end signal from the television lens to the peripheral devices.

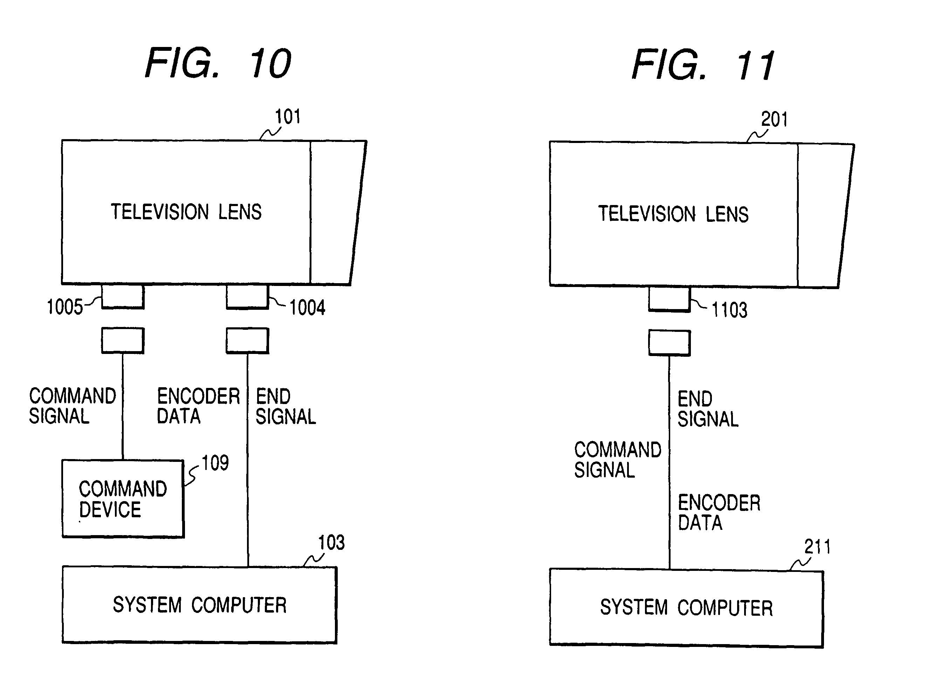

Fig. 10 shows the case of the first embodiment illustrated in Fig. 1, in which the television lens 101 is provided with a connector 1005 for the command signal and a connector 1004 for the encoder data and the end signal.

In photography of ordinary television cameras, connection was needed only between the television lens and the television camera and the connector 1004 for the encoder data and the end signal was not necessitated. However, since the television lenses will be often used in the virtual studios etc. in the future, the connector 1004 for the encoder data and the end signal can also be set as a standard of the television lenses.

Fig. 11 shows the case of the third embodiment illustrated in Fig. 2, in which there is only one connection connector to the system computer. In this case, the television lens can be connected to the peripheral device by one connector 1103, which permits transmission of the difference signal indicating the difference between the command signal and the position signal, the encoder data, the end signal, and so on.

Of course, it is also possible to incorporate the command signal of the television lens in the connector 1103.

The second embodiment of Fig. 3 and the fourth embodiment of Fig. 4 may employ either form of the connector 1004 illustrated in Fig. 10 and the connector 1103 illustrated in Fig. 11.

## Claims

1. An image processing system comprising:
a television camera (102)
a television lens apparatus (101), attachable to the television camera, including a driving mechanism (106) for driving an optical element based on a cameraman's command from a command device, and an encoder (108) adapted to detect an action of the driving mechanism and to generate a digital signal on the basis of the detection
an image processing computer (103) for processing an image signal of the television camera and a computer graphic image, wherein the image signal and the computer graphic image are superposed based on the digital signal in the image processing computer (103);
a first connector arranged to connect the television lens apparatus (101) and the television camera (102) with a serial communication line (116) and **characterized by** the television lens apparatus (101) further including
a second connector (1004) arranged to transmit the digital signal to the image processing computer (103) by a parallel communication line (110).

2. The image processing system according to claim 1, wherein said driving mechanism (106) of the television lens is adapted to be driven on the basis of a command signal from a command device (109).

3. The image processing system according to claim 2, further comprising a third connector adapted to receive the command signal from the command device (109) by serial communication line (112)

4. The image processing system according to claim 1, wherein said driving mechanism (106) is a mechanism for driving one of a zoom lens or an iris or a focus lens.

## Patentansprüche

1. Bildverarbeitungssystem mit:
einer Fernsehkamera (102),
einer Fernsehlinsenvorrichtung (101), die an die Fernsehkamera anbringbar ist, einschließlich eines Antriebsmechanismus (106) zum Antreiben eines optischen Elements basierend auf einem Kommando eines Kameramanns von einer Kommandoeinrichtung, und einem Encoder (108), der angepasst ist, eine Aktion des Antriebsmechanismus zu erfassen und ein digitales Signal auf der Basis der Erfassung zu generieren;
einem Bildverarbeitungscomputer (103) zum Verarbeiten eines Bildsignals der Fernsehkamera und eines Computergraphikbilds, wobei das Bildsignal und das Computergraphikbild basierend auf dem digitalen Signal in dem Bildverarbeitungscomputer (103) überlagert sind;
einem ersten Anschlussstück, das angeordnet ist, die Fernsehlinsenvorrichtung (101) und die Fernsehkamera (102) mit einer seriellen Kommunikationsleitung (116) zu verbinden, und **gekennzeichnet ist dadurch**, dass die Fernsehlinsenvorrichtung (101) ferner enthält:
ein zweites Anschlussstück (1004), das angeordnet ist, das digitale Signal zu dem Bildverarbeitungscomputer (103) **durch** eine parallele Kommunikationsleitung (110) zu übertragen.

2. Bildverarbeitungssystem nach Anspruch 1, wobei der Antriebsmechanismus (106) der Fernsehlinse angepasst ist, auf der Grundlage eines Kommandosignals von einer Kommandoeinrichtung (109) angetrieben zu werden.

3. Bildverarbeitungssystem nach Anspruch 2, ferner mit einem dritten Anschlussstück, das angepasst ist, das Kommandosignal von der Kommandoeinrichtung (109) über eine serielle Kommunikationsleitung (112) zu empfangen.

4. Bildverarbeitungssystem nach Anspruch 1, wobei der Antriebsmechanismus (106) ein Mechanismus zum Antreiben einer Zoomlinse oder einer Iris oder einer Fokuslinse ist.

## Revendications

1. Système de traitement d'images comprenant :
une caméra (102) de télévision
un appareil (101) de lentille de télévision, pouvant être fixé à la caméra de télévision, comportant un mécanisme d'entraînement (106) pour entraîner un élément optique sur la base d'une commande d'un caméraman à partir d'un dispositif de commande, et un codeur (108) adapté pour détecter une action du mécanisme d'entraînement et pour générer un signal numérique sur la base de la détection ;
un ordinateur (103) de traitement d'images destiné à traiter un signal d'images de la caméra de télévision et une image graphique d'ordinateur, où le signal d'images et l'image graphique d'ordinateur sont superposés sur la base du signal numérique dans l'ordinateur (103) de traitement d'images ;
un premier connecteur agencé pour connecter l'appareil (101) de lentille de télévision et la caméra (102) de télévision à une ligne de communication série (116)
et **caractérisé par** l'appareil (101) de lentille de télévision comportant en outre
un deuxième connecteur (1004) agencé pour transmettre le signal numérique à l'ordinateur (103) de traitement d'images par une ligne de communication parallèle (110).

2. Système de traitement d'images selon la revendication 1,
dans lequel ledit mécanisme d'entraînement (106) de la lentille de télévision est adapté pour être entraîné sur la base d'un signal de commande provenant d'un dispositif de commande (109).

3. Système de traitement d'images selon la revendication 2,
comprenant en outre un troisième connecteur adapté pour recevoir le signal de commande provenant du dispositif de commande (109) par une ligne de communication série (112).

4. Système de traitement d'images selon la revendication 1,
dans lequel ledit mécanisme d'entraînement (106) est un mécanisme destiné à entraîner l'un d'un objectif à focale variable, d'une lentille de focalisation ou d'un diaphragme.
